(19) Europäisches Patentamt
European Patent Office
Office européen des brevets

(11) EP 1 736 246 A1

(12) EUROPEAN PATENT APPLICATION

(43) Date of publication:
**27.12.2006 Bulletin 2006/52**

(51) Int Cl.:
***B05D 7/00*** *(2006.01)* ***B05D 5/00*** *(2006.01)*

(21) Application number: **06011749.6**

(22) Date of filing: **07.06.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **20.06.2005 US 156769**

(71) Applicant: **E.I. du Pont de Nemours and Company**
**Wilmington, DE 19898 (US)**

(72) Inventors:
- **Goebel, Armin**
  **58300 Wetter (DE)**
- **Bruylants, Paul**
  **Hever 3191 (BE)**
- **Huybrechts, Josef**
  **Turnhout 2300 (BE)**
- **Wiggershaus, Stephan**
  **58332 Schwelm (DE)**

(74) Representative: **DuPont Performance Coatings**
**Biering/Blum/Kimpel**
**Christbusch 25**
**42285 Wuppertal (DE)**

# (54) Process for the multilayer coating of substrates

(57) The invention is directed to a process for multi-layer coating of substrates comprising the following steps:
1. applying a base coat layer of a water-based colour- and/or special effect-imparting base coat composition onto an optionally precoated vehicle substrate,
2. optionally drying or curing the base coat layer obtained in step 1,
3. applying a clear coat layer of a transparent clear coat onto the base coat layer and
4. curing the clear coat layer applied in step 3, optionally together with the base coat layer, wherein the water-based colour- and/or special effect-imparting base coat composition comprises:
A) at least one colour- and/or special effect-imparting pigment,
B) water and optionally organic solvents and conventional coating additives and
C) at least one water-dilutable polyurethane/urea resin with a urethane group content of 80 - 220 mmol/g of solid resin of the polyurethane/urea resin, a urea group content of 20-150 mmol/g of solid resin of the polyurethane/urea resin and a crosslinked fraction of 20-95%, relative to solid resin of the polyurethane/urea resin.

EP 1 736 246 A1

## Description

### Background of the Invention

The invention relates to a process for the multilayer coating of vehicle substrates using pigmented water-borne base coat compositions based on polyurethane/urea resins. The process may in particular be used in vehicle repair coating.

### Description of Related Art

For environmental reasons, water-based coating compositions are increasingly being used in vehicle coating, both for original coating and for repair coating. However, the coatings produced using aqueous coating compositions do not in all respects achieve the high quality levels of conventional solvent-based coatings. For example, in particular for the purposes of vehicle repair coating when applying water-borne special effect base coat compositions, the optical appearance of the base coat layers obtained may be impaired, for example by clouding or inadequate development of the special effect.

In the past, there have been numerous attempts to eliminate or at least mitigate the disadvantages of the prior art, for example, by developing suitable binders or adapting coating formulations.

It is accordingly known to use water-dilutable polyurethane resins in the form of aqueous dispersions as the main binder in aqueous coating compositions and especially also in water-borne base coat compositions.

The properties of the aqueous coating compositions and also of the water-borne base coat compositions and the coatings obtained there-from are substantially determined by the specific structure of the polyurethanes used. EP 1 159 323, for example, accordingly describes water-dilutable polyurethane dispersions based on polyester polyols, dimethylolpropionic acid and diisocyanates, which have been chain-extended with compounds containing amino groups. Polyamines or aminoalcohols may be used for chain extension in this connection. No statements are made with regard to the specific composition of the chain extenders. The water-borne base coat compositions containing these polyurethane dispersions are intended to yield single-tone coatings for plastics with good adhesion even after exposure to condensation.

WO 01/02457 describes aqueous coating compositions, preferably aqueous fillers based on polyurethane resins, wherein the polyurethanes are produced by chain-extending conventional NCO-functional polyurethane prepolymers with at least one polyol, at least one polyamine and at least one alkanolamine. Diamines are preferably used for chain extension. It is, however, also possible to use polyamines which contain more than two amino groups per molecule. In such cases, however, it must be ensured, for example by also using monoamines, that crosslinked polyurethane resins are not obtained.

Water-borne base coat compositions based on the above-described polyurethane dispersions exhibit the disadvantage, in particular, for the purposes of vehicle repair coating, of having an unsatisfactory visual appearance. For example, clouding occurs when water-borne special effect base coat compositions are applied and the metallic effect obtained on coating with metallic effect base coat compositions is sometimes insufficiently distinct. The optical quality of the coatings obtained also varies as a function of the ambient conditions during application, in particular being dependent upon relative atmospheric humidity. Accordingly, when water-borne special effect base coat compositions are applied at elevated atmospheric humidity, higher levels of clouding are observed.

WO 98/05696 furthermore describes aqueous polyurethane/urea dispersions which are obtained by producing an NCO prepolymer and then performing chain-extension with 0.5-10 wt.%, relative to the complete polyurethane/urea dispersion, of a mixture of one or more diamines and a polyamine with a functionality of >2, wherein the polyamine with the functionality of >2 constitutes at least 20 wt.% of the amine mixture. Triamines are preferably used for this purpose. The polyurethane urea dispersions described in said document are developed for coating wood substrates. WO 98/05696 contains no reference to the use of these polyurethane/urea dispersions in special effect-imparting water-borne base coat compositions, in particular in vehicle repair coating.

A requirement accordingly still remains for a process for the application of aqueous coating compositions, in particular water-borne base coat compositions in vehicle coating, in particular in vehicle repair coating, which process yields coatings with perfect optical quality and a good metallic effect. The coatings obtained should also fulfil the conventional requirements which are applied to a vehicle coating, in particular a vehicle repair coating, for example, with regard to chemical and weathering resistance and resistance to mechanical influences.

### Summary of the Invention

The present invention relates to a process for the multilayer coating of vehicle substrates comprising the following steps:

1. applying a base coat layer of a water-based colour- and/or special effect-imparting base coat composition onto an optionally precoated vehicle;
2. optionally, curing the base coat layer obtained in step 1;
3. applying a clear coat layer of a transparent clear coat onto the base coat layer and
4. curing the clear coat layer applied in step 3, optionally, together with the base coat layer, wherein the water-based colour- and/or special effect-imparting base coat composition comprises:

A) at least one colour- and/or special effect-imparting pigment,
B) water and optionally organic solvents and conventional coating additives and
C) at least one water-reducible polyurethane/urea resin having a urethane group content of 80-220 mmol/g of solid resin of the polyurethane/urea resin, preferably of 100-200 mmol/g of solid resin of the polyurethane/urea resin, a urea group content of 20-150 mmol/g of solid resin of the polyurethane/urea resin, preferably of 40-100 mmol/g of solid resin of the polyurethane/urea resin, and a crosslinked fraction of 20-95%, preferably of 30-90%, especially preferred of 40-90%, relative to solid resin of the polyurethane/urea resin, wherein the urea/polyurethane resin is obtained by:

I. preparing an NCO-functional polyurethane prepolymer by reacting

a) at least one polyol with a number average molecular weight Mn of 500 to 5000 g/mol, preferably of 1000 to 2000 g/mol with
b) at least one polyisocyanate and
c) at least one compound with more than one group reactive towards isocyanate groups and at least one group selected from a group consisting of ionic group, group capable of forming ions and non-ionic hydrophilic group,

II. reacting the NCO-functional polyurethane prepolymer with polyamine component d), said polyamine component d) comprising

d1) 0 - 80%, preferably 20-50% by weight of at least one diamine,
d2) 20 - 100%, preferably 80-50% by weight of at least one polyamine with a functionality of > 2, wherein the % by weight of components d1) and d2) add up to 100% by weight.

It has surprisingly been found that water-borne special effect base coat compositions based on the above-described polyurethane/urea resins yield coatings which, when applied by spraying, irrespective of the ambient conditions during application, in particular irrespective of relative atmospheric humidity, have consistently good optical appearance, can be applied without clouding and exhibit a very good metallic effect.

## Detailed Description of the Embodiments

The short term polyurethane shall be used here and hereinafter for the term polyurethane/ urea resin. Unless stated otherwise, all molecular weights (both number and weight average molecular weight) referred to herein are determined by GPC (gel permeation chromatography) using polystyrene as the standard. Wt.% shall mean percent by weight.
First of all, the polyurethane C) used in the aqueous base coats, which is essential for the present invention, shall be described.
The polyurethane is produced by initially preparing in step I an NCO-functional polyurethane prepolymer from components a), b) and c) and optionally, further components. Component a) comprises linear or branched polyols, preferably diols, with an OH value of 50-250 mg KOH/g and a number average molar weight (Mn) of 500 to 5000 g/mol, preferably of 1000 to 2000 g/mol.
Compounds usable as component a) are polyester polyols, polycarbonate polyols, polyether polyols, polylactone polyols and/or poly(meth)acrylate polyols or the corresponding diols. The polyols and diols may in each case be used individually or in combination with one another.
Polyester polyols, preferably polyester diols, and/or polycarbonate polyols, preferably, polycarbonate diols, are preferably used as component a).
The polyester polyols may be produced in a conventional manner known to the person skilled in the art, for example, by polycondensation from organic dicarboxylic acids or the anhydrides thereof and organic polyols. The acid component for the production of the polyester polyols preferably comprises low molecular weight dicarboxylic acids or the anhydrides thereof having 2 to 17, preferably, fewer than 16, particularly preferably, fewer than 14 carbon atoms

per molecule. Suitable dicarboxylic acids are, for example, phthalic acid, isophthalic acid, alkylisophthalic acid, terephthalic acid, hexahydrophthalic acid, adipic acid, trimethyladipic acid, azelaic acid, sebacic acid, fumaric acid, maleic acid, glutaric acid, succinic acid, itaconic acid and 1,4-cyclohexanedicarboxylic acid. The corresponding anhydrides, where existing , may be used instead of the acids. In order to achieve branching, it is also possible to add proportions of more highly functional carboxylic acids, for example, trifunctional carboxylic acids, such as, trimellitic acid, malic acid and dimethylolpropionic acid.

Polyols usable for the production of the polyester polyols are preferably diols, for example, glycols such as, ethylene glycol, 1,2-propanediol, 1,2-, 1,3- and 1,4-butanediol, 2-ethylene-1,3-propanediol, 1,6-hexanediol, 1,2- and 1,4-cyclohexanediol, hydrogenated bisphenol A and neopentyl glycol.

The diols may optionally be modified by small quantities of more highly hydric alcohols. Examples of more highly hydric alcohols, which may also be used are trimethylolpropane, pentaerythritol, glycerol and hexanetriol. A proportion of chain-terminating, monohydric alcohols may also be used, for example those having 1 to 18 C atoms per molecule, such as, propanol, butanol, cyclohexanol, n-hexanol, benzyl alcohol, isodecanol, saturated and unsaturated fatty alcohols.

The components are here reacted in quantity ratios such that the desired OH values of the polyester polyols are obtained. The polyester polyols preferably contain substantially no carboxyl groups. They may, for example, have acid values of <3, preferably of <1. It is, however, also possible for the polyester polyols to contain carboxyl groups, in which case they may, for example, have acid values of 5 to 50 mg of KOH/g. The carboxyl groups may be introduced, for example, by means of di- or trifunctional carboxylic acids, such as, for example, trimellitic acid, malic acid, and dihydroxymonocarboxylic acids, such as, for example, dimethylolpropionic acid.

Polycarbonate polyols and in particular polycarbonate diols are also preferred as component a). The polycarbonate polyols comprise esters of carbonic acid, which are obtained by reacting carbonic acid derivatives, for example, diphenyl carbonate or phosgene, with polyols, preferably diols. Suitable diols which may be considered are, for example, ethylene glycol, 1,2- and 1,3-propanediol, 1,4- and 1,3-butanediol, 1,6-hexanediol, neopentyl glycol, 2-methyl-1,3-propanediol and 1,4-bishydroxymethylcyclohexane.

Polyether polyols and/or polylactone polyols are also suitable as component a). Polyether polyols which may, for example, be considered are polyether polyols of the following general formula:

$$H\,[O - [CHR_1)_n]_m\,OH,$$

in which $R_1$ means hydrogen or a lower alkyl residue (for example, $C_1$ to $C_6$ alkyl), optionally, with various substituents, n means 2 to 6 and m means 10 to 50. The residues $R_1$ may be identical or different. Examples of polyether polyols are poly(oxytetramethylene) glycols, poly(oxyethylene) glycols and poly(oxypropylene) glycols or mixed block copolymers which contain different oxytetramethylene, oxyethylene and/or oxypropylene units.

The polylactone polyols comprise polyols, preferably diols, which are derived from lactones, preferably from caprolactones. These products are obtained, for example, by reacting an epsilon-caprolactone with a diol. The polylactone polyols are distinguished by repeat polyester moieties which are derived from the lactone. These repeat molecular moieties may, for example, be of the following general formula:

$$\overset{\displaystyle O}{\overset{\|}{-\,C}}\,-\,(CHR_2)_n\,-\,CH_2O\,-\,,$$

wherein n is preferably 4 to 6 and $R_2$ is hydrogen, an alkyl residue, a cycloalkyl residue or an alkoxy residue and the total number of carbon atoms in the substituents of the lactone ring does not exceed 12. Preferably used lactones are the epsilon-caprolactones, in which n has a value of 4. Unsubstituted epsilon-caprolactone is here particularly preferred. The lactones may be used individually or in combination. Diols suitable for reaction with the lactones are, for example, ethylene glycol, 1,3-propanediol, 1,4-butanediol and dimethylolcyclohexane.

In addition to component a), one or more low molecular weight polyhydric alcohols, preferably difunctional alcohols, with a molecular weight of below 500 g/mol may optionally also be used. Examples of such compounds are ethylene glycol, 1,2- and 1,3-propanediol, 1,3- and 1,4-butanediol, 1,6-hexanediol, 1,8-octanediol, 1,2- and 1,4-cyclohexanediol, dimethylolpropane, neopentyl glycol.

Any desired organic polyisocyanates, preferably diisocyanates, may be used individually or in combination as component b) for the production of the NCO-functional polyurethane prepolymers. The polyisocyanates may, for example, be of an aromatic, aliphatic and/or cycloaliphatic nature. These may also comprise diisocyanates containing ether or ester groups. Examples of suitable diisocyanates are trimethylene diisocyanate, tetramethylene diisocyanate, pentamethylene diisocyanate, hexamethylene diisocyanate, propylene diisocyanate, ethylene diisocyanate, 2,3-dimethylethylene diisocyanate, 1-methyltrimethylene diisocyanate, 1,3-cyclopentylene diisocyanate, 1,4-cyclohexylene diisocyanate, 1,2-cyclohexylene diisocyanate, 1,3-phenylene diisocyanate, 1,4-phenylene diisocyanate, 2,4-tolylene diisocyanate, 2,6-tolylene diisocyanate, 1-isocyanatomethyl-5-isocyanato-1,3,3-trimethylcyclohexane, bis(4-isocyanatophenyl)methane, 4,4-diisocyanatodiphenyl ether, 1,5-dibutylpentamethylene diisocyanate, 2,3-bis(8-isocyanatooctyl)-4-octyl-5-hexylcyclohexane, 3-isocyanatomethyl-1-methylcyclohexyl isocyanate and/or 2,6-diisocyanatomethyl caproate.

It is also possible to use sterically hindered isocyanates with 4 to 25, preferably 6 to 16 C atoms, which contain in alpha position relative to the NCO group one or two linear, branched or cyclic alkyl groups with 1 to 12, preferably 1 to 4 C atoms as a substituent on the parent structure. The parent structure may consist of an aromatic or alicyclic ring or of an aliphatic linear or branched C chain having 1 to 12 C atoms. Examples of these are isophorone diisocyanate, bis(4-isocyanatocyclohexyl)methane, 1,1,6,6-tetramethylhexamethylene diisocyanate, 1,5-dibutylpentamethylene diisocyanate, 3-isocyanatomethyl-1-methylcyclohexyl isocyanate, p- and m-tetramethylxylylene diisocyanate and/or the corresponding hydrogenated homologues.

Component c) for the production of the NCO-functional prepolymers preferably comprises low molecular weight compounds which have at least one, preferably more than one, particularly preferably, two groups reactive with isocyanate groups and at least one ionic group, group capable of forming ions and/or non-ionic hydrophilic group. Groups capable of forming anions, which may be considered are, for example, carboxyl, phosphoric acid and sulfonic acid groups. Preferred anionic groups are carboxyl groups. Groups capable of forming cations, which may be considered are, for example, primary, secondary and tertiary amino groups or onium groups, such as, quaternary ammonium, phosphonium and/or tertiary sulfonium groups. Anionic groups or groups capable of forming anions are preferred. Preferred non-ionic hydrophilic groups are ethylene oxide groups. Suitable isocyanate-reactive groups are in particular hydroxyl groups and primary and/or secondary amino groups.

Preferred compounds, which may be considered as component c) are those containing carboxyl and hydroxyl groups. Examples of such compounds are hydroxyalkanecarboxylic acids of the following general formula:

$$(HO)_xQ(COOH)_y$$

in which Q represents a linear or branched hydrocarbon residue with 1 to 12 C atoms and x and y each mean 1 to 3. Examples of such compounds are citric acid and tartaric acid. Carboxylic acids where x = 2 and y = 1 are preferred. A preferred group of dihydroxyalkanoic acids are alpha,alphadimethylolalkanoic acids. alpha,alpha-Dimethylolpropionic acid and alpha,alpha-dimethylolbutyric acid are preferred.

Further examples of usable dihydroxyalkanoic acids are dihydroxypropionic acid, dimethylolacetic acid, dihydroxysuccinic acid or dihydroxybenzoic acid. Further compounds usable as component c) are acids containing amino groups, for example, alpha,alpha-diaminovaleric acid, 3,4-diaminobenzoic acid, 2,4-diaminotoluenesulfonic acid and 4,4-diaminodiphenyl ether sulfonic acid. Further compounds usable as component c) are, e.g., difunctional polyethylene oxide dialcohols.

Components a), b) and c) are reacted together in a conventional manner known to the person skilled in the art, for example at temperatures of 50-120°C, preferably of 70-100°C, optionally with the addition of catalysts. The components are here reacted in quantities such that a reaction product with free isocyanate groups is obtained, i.e. the reaction is performed with an excess of polyisocyanate. For example, the reaction may be performed with an equivalent ratio of NCO groups : OH groups of 1.2:1 to 2.0:1, preferably of 1.4:1 to 1.9:1. The NCO-polyurethane prepolymer should preferably have an NCO content of 3.0 to 6.0%, particularly preferably of 3.5 to 5.0%.

The polyurethane prepolymer containing NCO groups obtained in stage I is then reacted in stage II with the polyamine component d), resulting in an increase in molar mass and the production of crosslinked fractions in the polyurethane. It is endeavoured here to achieve a complete reaction with a virtually equivalent molar ratio between reactive amino groups and isocyanate groups. The polyamine component d) comprises d1) 0 - 90, preferably 20 - 50% by weight, of at least one diamine and d2) 10 - 100, preferably 50-80% by weight of at least one polyamine with a functionality >2, wherein the % by weight of components d1) and d2) add up to 100% by weight.

Examples of diamines which may be used as component d1) are (cyclo)aliphatic alkyl amines with 1-15 carbon atoms in the molecule and substituted derivatives thereof, wherein the alkyl groups can be linear and/or branched. Component d1) may contain primary and/or secondary amino groups. Examples of component d1) are 1,2-ethylendiamine, 1,2-propylenediamine, 1,3-propylenediamine 1,6-hexamethylenediamine, piperazine, 2,5-dimethylpiperazine, 1-amino-3-aminomethyl-3,5,5-trimethylcyclohexane, 4,4'-diaminodicyclohexylmethane, 1,4-diaminocyclohexane, neopentyldiamine, octamethylene diamine, isophorone diamine, 4,4'-diamino diphenylmethane and 2-amino benzamide. 1,2-Ethylendiamine is especially preferred.

Examples of polyamines, which may be used as component d2) are compounds containing more than two, e.g., three, four or more amino groups in the molecule. Component d2) may contain primary and/or secondary amino groups. Examples of component d2) are triamines such as diethylene triamine and dipropylene triamine. Examples of component d2) are tetramines, such as, triethylene tetramine or tripropylene tetramine. Further examples of component d2) are amines with more than four amino groups, such as, tetraethylene pentamine and pentaethylene hexamine.

Preferred compounds which can be used as component d2) are triamines and/or tetramines, such as, triethylene tetramine, tripropylene tetramine, diethylene triamine and dipropylene triamine.

The polyamine component d) accordingly preferably contains 0-90 wt.%, particularly preferably 20-50 wt.%, of amine component d1) and 10-100 wt.%, particularly preferably 50-80 wt.%, of at least one trifunctional amine and/or at least one tetrafunctional amine d2), wherein the sum of components d1) and d2) amounts to 100 wt.%.

The presence of the polyamine d2) with a functionality of > 2, preferably with functionality three or four, is essential to the invention. The reaction of the polyurethane prepolymers containing NCO groups with the polyamine d2) with a functionality of > 2 results in the formation of crosslinked fractions in the polyurethane resin. An increase in molecular weight simultaneously occurs. The polyamine component d2) is used in quantities such that the resultant polyurethane has a crosslinked fraction of 20-95 wt.%, preferably of 30-90 wt.%, especially preferred of 40-90 wt.%relative to the total quantity of the polyurethane. The method for determining the crosslinked fraction is described in the Examples section.

In principle, all components a) to c) and d1) to d2) are reacted in the manner known to the person skilled in the art. Type and amount of each individual component are selected such that the above-stated characteristics of the resultant polyurethane, such as, content of urethane and urea groups, crosslinked fraction and acid value, are obtained.

In order to achieve sufficient water-dilutability of the polyurethane the ionic groups or groups convertible into ionic groups of the polyurethane are at least partially neutralised. The polyurethane resin preferably contains anionic groups, for example, carboxyl groups. The anionic groups are neutralised with bases. Examples of basic neutralising agents are tertiary amines, such as, trimethylamine, triethylamine, dimethylethylamine, dimethylbutylamine, N-methylmorpholine, dimethylethanolamine and dimethylisopropanolamine.

Neutralisation may proceed before or after the reaction of the NCO-functional polyurethane prepolymer with the polyamine component d). After neutralisation, the NCO-functional polyurethane prepolymer or the polyurethane is converted into the aqueous phase. Neutralisation and conversion into the aqueous phase may, however, also proceed simultaneously. Parallel or in addition the polyurethane may contain hydrophilic non-ionic groups to provide sufficient water-dilutability. If non-ionic hydrophilic groups, e.g., ethylene oxide groups are present, it is preferred that they are present in addition to ionic groups, preferably in addition to anionic groups. In addition thereto, it is possible to obtain water-dilutability via external emulsifiers.

The reaction of the NCO-functional polyurethane prepolymers with the polyamine component d) may proceed before or after conversion into the aqueous phase. It preferably proceeds in the aqueous phase. Usually the NCO-functional polyurethane prepolymer or the polyurethane are neutralised before or during conversion into the aqueous phase.

The aqueous polyurethane dispersion has a solids content of preferably 25-50 wt.%, particularly preferably of 30-45 wt.%.

The above-described water-dilutable polyurethane (component A) may optionally be used in combination with proportions of further water-dilutable resins. Further water-dilutable resins which may be considered are, for example, conventional water-dilutable (meth)acrylic copolymers, polyester resins and optionally modified polyurethane resins differing from the above-described water-dilutable polyurethane resins.

In addition to the water-dilutable polyurethane C) the water-borne base coat compositions to be used according to the invention contain at least one color and/or special effect imparting pigment (component A), water and optionally, conventional coating additives and organic solvents (component B). The water-borne base coat compositions preferably contain 50-80 wt.% water, especially preferred 60-75 wt.% water, relative to the complete coating composition.

Suitable pigments A) are virtually any colour- and/or special effect-imparting pigments. Suitable colour-imparting pigments are any conventional coating pigments of an organic or inorganic nature. Examples of inorganic or organic colour-imparting pigments are titanium dioxide, micronised titanium dioxide, iron oxide pigments, carbon black, azo pigments, phthalocyanine pigments, quinacridone or pyrrolopyrrole pigments. Examples of special effect-imparting pigments are metal pigments, for example, made from aluminium, copper or other metals; interference pigments, such as, for example, metal oxide coated metal pigments, for example, titanium dioxide coated or mixed oxide coated aluminium, coated mica, such as, for example, titanium dioxide coated mica and graphite effect pigments.

The optionally present organic solvents comprise conventional coating solvents. These may originate from the preparation of the binders or may be added separately. Water-miscible solvents are preferred. Examples of suitable

solvents are mono- or polyhydric alcohols, for example, propanol, butanol, hexanol; glycol ethers or esters, for example, diethylene glycol dialkyl ethers, dipropylene glycol dialkyl ethers, in each case with C1 to C6 alkyl, ethoxypropanol, butoxyethanol, glycols, for example, ethylene glycol, propylene glycol, N-methylpyrrolidone and ketones, for example, methyl ethyl ketone, acetone, and cyclohexanone.

Examples of conventional coating additives are levelling agents, rheological agents, such as, highly disperse silica or polymeric urea compounds, thickeners, such as, partially crosslinked polycarboxylic acid or polyurethanes, defoamers, wetting agents, anticratering agents, dispersants and catalysts. The additives are used in conventional amounts known to the person skilled in the art

In order to produce the water-borne base coat compositions, it is also possible to use paste resins for grinding or incorporating the pigments.

In the multilayer coating process according to the invention, in step 1, a base coat layer of the above-described water-borne base coat composition is first of all applied onto an optionally precoated substrate. Suitable substrates are metal and plastics substrates, in particular the substrates known in the automotive industry, such as, for example, iron, zinc, aluminium, magnesium, stainless steel or the alloys thereof, together with polyurethanes, polycarbonates or polyolefins. Any other desired industrial goods from industrial coating processes may however also be coated as substrates.

In the case of vehicle or vehicle parts coating, the water-borne base coat compositions are applied, preferably by means of spraying, onto substrates precoated in conventional manner with primers and/or primer surfacers. Preferably, the water-borne base coat compositions are applied in two layers, whereas the second layer may be applied wet-on-wet onto the first layer, i.e., without any flashing-off period or may be applied wet-on-dry onto the first layer, i.e., with an intermediate flashing-off period. Flashing off may be carried out at room temperature within, e.g., 5-30 minutes. Preferred is a coating process where the second base coat layer is applied wet-on-dry onto the first base coat layer, i.e., with an intermediate flashing-off period. Particularly, this embodiment leads to a good metallic effect development, i.e., a good metallic flop of the resultant coating.

Once the base coat has been applied, a clear coat is applied. The clear coat may here be applied onto the base coat layer either after drying or curing or wet-on-wet, optionally, after briefly flashing off. Suitable clear coats are, in principle, any known unpigmented or transparently pigmented coating compositions as are, for example, conventional in vehicle coating. They may here comprise single or two-component solvent- or water-based clear coat compositions or clear powder coatings. The clear coat may be curable thermally and/or by means of high-energy radiation.

The resultant coatings may be cured at room temperature or be forced at higher temperatures, for example, of up to 80°C, preferably at 40 to 60°C. They may, however, also be cured at higher temperatures of, for example, 80-160°C. Curing temperatures are determined by the field of use as well as the by the type of crosslinker. The coating compositions are applied by conventional methods, preferably by means of spray application.

The process according to the invention may particularly advantageously be used in vehicle repair coating. In vehicle repair coating, application generally proceeds manually by means of spray gun, and predominantly in premises without air conditioning under the most varied application conditions. The process according to the invention now yields uniform, high-quality coatings, irrespective of ambient conditions during application, in particular irrespective of relative atmospheric humidity. In particular, the clouding frequently observed on application of water-borne special effect base coat compositions is suppressed and is not observed even at relatively high levels of atmospheric humidity. A good metallic effect (metallic flop) is also achieved.

The process according to the invention may also be used in the original vehicle production line painting as well as for coating large vehicles and transportation vehicles, such as trucks, busses and railroad cars. Coating of vehicles may also include coating of vehicle parts.

The following Examples are intended to illustrate the invention in greater detail.

## Examples

### Example 1

### Production of a Polyurethane Dispersion A

20.3 wt.% of a conventional commercial polyester diol (Priplast 3192; Unichema) with an OH value of 58.9 mg of KOH/g and a molar mass of 2000 g/mol, 6.16 wt.% of acetone and 0.004 wt.% of dibutyltin dilaurate are initially introduced and the mixture is heated to 40°C. 9.2 wt.% of isophorone diisocyanate are apportioned at this temperature within 1 hour. 1.2 wt.% of acetone are then added. The temperature is then raised to 52°C. This temperature is maintained until an NCO content of 7.1 % (relative to the solution) is reached. Once the NCO content has been reached, 1.87 wt. % of dimethylolpropionic acid, 1.03 wt.% of dimethylisopropylamine and 0.22 wt.% of acetone are added. The temperature is then maintained at 52°C until an NCO content of 3.7% (relative to the solution) is reached. Once the NCO content has been reached, the heating is switched off and 44.4 wt.% of deionised water are added within 10 minutes. A mixture

of 6.653 wt.% of ethylenediamine solution (6.26% strength) and 8.095 wt.% of triethylenetetramine solution (6.25% strength) is then immediately added within 5 minutes. The temperature is then raised to 52°C and maintained at this level for 2 hours. After this period, the temperature is raised to 70°C and vacuum distillation is performed. A solids content of 35 wt.% is then established by the addition of deionised water.

The crosslinked fraction is 29.7%.
$M_w/M_n$ = 280000/260000 (determined by means of gel permeation chromatography - GPC)
Acid value: 24.8 mg of KOH/g

Example 2

Production of a Polyurethane Dispersion B

20.450 wt.% of a conventional commercial polyester diol (Priplast 3192; Unichema) with an OH value of 58.9 mg of KOH/g and a molar mass of 2000 g/mol, 6.21 wt.% of acetone and 0.004 wt.% of dibutyltin dilaurate are initially introduced and the mixture is heated to 40°C. 9.27 wt.% of isophorone diisocyanate are apportioned at this temperature within 1 hour. 1.21 wt.% of acetone are then added. The temperature is then raised to 52°C. This temperature is maintained until an NCO content of 7.1 % (relative to the solution) is reached. Once the NCO content has been reached, 1.89 wt.% of dimethylolpropionic acid, 1.04 wt.% of dimethylisopropylamine and 0.22 wt.% of acetone are added. The temperature is then maintained at 52°C until an NCO content of 3.7% (relative to the solution) is reached. Once the NCO content has been reached, the heating is switched off and 44.75 wt.% of deionised water are added within 10 minutes. A mixture of 6.687 wt.% of ethylenediamine solution (6.25% strength) and 7.652 wt.% of diethylene triamine solution (6.25% strength) is then immediately added within 5 minutes. The temperature is then raised to 52°C and maintained at this level for 2 hours. After this period, the temperature is raised to 70°C and vacuum distillation is performed. A solids content of 35 wt.% is then established by the addition of deionised water.

The crosslinked fraction is 41 %.
Acid value: 24.2 mg of KOH/g

Example 3 (Comparison)

Production of a Comparative Polyurethane Dispersion C

23.420 wt.% of a conventional commercial polyester diol (Priplast 3192; Unichema) with an OH value of 58.9 mg KOH/g and a molar mass of 2000 g/mol, 6.02 wt.% of acetone and 0.004 wt.% of dibutyltin dilaurate are initially introduced and the mixture is heated to 40°C. 7.8 wt.% of isophorone diisocyanate are apportioned at this temperature within 1 hour. 1.17 wt.% of acetone are then added. The temperature is then raised to 52°C. This temperature is maintained until an NCO content of 4.9% (relative to the solution) is reached. Once the NCO content has been reached, 1.18 wt.% of dimethylolpropionic acid, 0.75 wt.% of triethylamine and 0.22 wt.% of acetone are added. The temperature is then maintained at 52°C until an NCO content of 3.0% (relative to the solution) is reached. Once the NCO content has been reached, the heating is switched off and 48.047 wt.% of deionised water are added within 10 minutes. A mixture of 11.390 wt.% of ethylenediamine solution (6.25% strength) is then immediately added within 5 minutes. The temperature is then raised to 52°C and maintained at this level for 2 hours. After this period, the temperature is raised to 70°C and vacuum distillation is performed. A solids content of 35 wt.% is then established by the addition of deionised water.

The crosslinked fraction is 0%.
$M_w/M_n$ = 41000/8400 (determined by means of gel permeation chromatography - GPC)
Acid value: 15,6 mg of KOH/g

Preparation of an Aqueous Acrylic Emulsion:

A reactor was charged with 688 parts by weight of deionized water and 16 parts by weight of Rhodapex EST30 (anionic surfactant available from Rhodia). The water and surfactant charge was heated to 80°C under an inert atmosphere and held at that temperature throughout the reaction. A first stirred monomer emulsion of 316.5 parts by weight butyl acrylate, 316.5 parts by weight methyl methacrylate, 35.6 parts by weight hydroxyethyl acrylate, 35.6 parts by weight methacrylic acid, 7.14 parts by weight allyl methacrylate, 348.8 parts by weight deionized water, 44.8 parts by weight of Rhodapex EST30, and 3.2 parts by weight ammonium persulfate was slowly added to the charge in the reactor. After all of the first monomer emulsion was in, an additional 100.8 parts by weight of deionized water was added as a rinse.

The contents of the reactor were held for an additional hour, during which a second stirred monomer emulsion of 377.4 parts by weight methyl methacrylate, 327.3 parts by weight butyl acrylate, 7.14 parts by weight allyl methacrylate, 378 parts by weight deionized water, 15.2 parts by weight of Rhodapex EST30, and 1.12 parts by weight ammonium

persulfate was prepared and, separately, a solution of 12.9 parts by weight of aminomethylpropanol in 98 parts by weight of deionized water. The aminomethylpropanol solution was added slowly to the reaction mixture and then, the second monomer emulsion was added slowly to the reaction mixture. After the addition was complete, 70 parts by weight of deionized water was added as a rinse. The reaction emulsion was held for at least an additional hour. The emulsion was then cooled to less than 40°C.
Solids: 45% by weight
Hydroxy value: 12 mg KOH/g
Acid value: 16.5 mg KOH/g

Preparation of Water-borne Base Coat Compositions

Preparation of an Aluminium Pigment Containing Pigment Dispersion:

14.61 wt.% butyl glycol, 34.06 wt.% butanol, 9.25 wt.% Additol XL 250 (Surface Specialties Germany GmbH), 40.00 wt.% aluminium paste (Alu pigment APL-20249 from Silberline) and 2.08 wt.% dimethyl ethyl amine have been mixed thoroughly. Water-borne base coat compositions 1 to 3 have been prepared by mixing the following components:

Base Coat 1: 9.10 wt.% of the aqueous acrylic emulsion prepared above, 48 wt.% deionised water, 13.00 wt.% of Aluminium Pigment Dispersion (prepared above), 23.25 wt.% of Polyurethane Dispersion A (prepared above), 2.90 wt.% butyl glycol, 3.50 wt.% Viscalex HV30 (10 wt.% solids in water, acrylate thickener from CIBA)
Base Coat 2: The same components were used as in Base Coat 1 with the exception that Polyurethane Dispersion A has been substituted by Polyurethane Dispersion B.
Comparative Base Coat 3: The same components were used as in base coat 1 with the exception that polyurethane dispersion A has been substituted by Comparative Polyurethane Dispersion C.

Application of Water-borne Base Coat Compositions

The Water-borne Base Coat Compositions 1 to 3 were applied according to the following procedure:

The water-borne base coat composition was applied in a first layer in a dry film layer thickness of about 8 μm by means of a spray gun to a standard metal panel, on which a commercial primer has been applied. After a flash-off time of about 5 minutes the water-borne base coat composition was applied in a second layer in a dry film layer thickness of about 8 μm by means of a spray gun to the first basecoat layer.
After a flash-off time of about 20 minutes a two-component solvent-based clear coat (isocyanate cross-linking) (Standocryl® 2 component HS clear coat, Standox® 2 component HS hardener 20-30) was applied. After a flash-off time of 10 minutes, the basecoat and clear coat layers were cured for 30 minutes at 60°C.

The Flop Index of each resultant coating has been determined as parameter to estimate the metallic flop effect:

| | Base Coat 1 | Base Coat 2 | Base Coat 3 |
|---|---|---|---|
| Flop Index at viscosity of 30 s * | 13.18 | 13.32 | 12.61 |
| Flop Index at viscosity of 40 s * | 13.37 | 13.22 | 12.23 |

* Viscosity of the waterborne base coat has been measured according to ISO 2431, ISO 5 cup, at 23°C.

It could be shown that coatings from base coats 1 and 2 (according to the present invention) have an improved metallic effect, i.e., an improved metallic flop, indicated by the increased Flop Index, compared with the coating from Comparative Base Coat 3.
A difference in Flop Index of 0.5 and >0.5 corresponds to a visually clear perceptible improvement of the flop effect of a coating.

Determination and Definition of Flop Index

Flop Index is the measurement on the change in reflectance of a metallic color as it is rotated through the range of viewing angles. A Flop Index of 0 indicates a solid color, while a very high flop metallic or pearlescent basecoat/clearcoat color may have a flop index of 15-17.
The light intensity (reflectance) L* has been measured at different viewing angles (15°, 45°, 110°) by using a

spectral photometer type MA64-B from X-rite. The Flop Index has been calculated from the light intensity L* according to the following formula (Alman):

$$\text{Flop Index} = \frac{2.69(L^*_{15°} - L^*_{110°})^{1.11}}{(L^*_{45°})^{0.86}}$$

Determination of Crosslinked Fraction

The quantity of the crosslinked fraction in the polyurethane resin (insoluble binder fraction) was determined gravimetrically by centrifugation. To this end, the sample was diluted with tetrahydrofuran and the insoluble binder fraction was determined by centrifugation.
Duplicate determinations were carried out in each case.
Before initial weighing, the sample was thoroughly homogenised and the solids content determined according to
DIN EN ISO 3251 (1 g initial weight/1h/125°C).
On an analytical balance, a quantity of sample containing 0.3 g of solid resin was weighed out to an accuracy of 0.1 mg into an Erlenmeyer flask using a transfer pipette. 30 ml of tetrahydrofuran were added using a measuring cylinder. The Erlenmeyer flask was sealed with a glass stopper and the mixture was stirred for ½ hour with a magnetic stirrer. The entire contents of the Erlenmeyer flask were then rinsed into a previously weighed centrifuge sleeve and centrifuged for ½ hour at 21000 rpm in a cooled centrifuge at a maximum of 25°C. The supernatant phase was then decanted and the centrifuge sleeve with the centrifugate was dried in a drying cabinet for ½ hour at 150°C. After cooling to room temperature, reweighing was performed to an accuracy of 0.1 mg on the analytical balance.
Evaluation was performed in accordance with the formula:

$$\% B = \frac{A \times 100\%}{E}$$

B = insoluble binder fraction in %
A = final weight in g
E = initial weight of solid resin in g

## Claims

**1.** A process for multilayer coating of substrates comprising the following steps:

1. applying a base coat layer of a water-based colour- and/or special effect-imparting base coat composition onto an optionally precoated vehicle substrate,
2. optionally, drying or curing the base coat layer obtained in step 1,
3. applying a clear coat layer of a transparent clear coat onto the base coat layer and
4. curing the clear coat layer applied in step 3, optionally, together with the base coat layer, wherein the water-based colour- and/or special effect-imparting base coat composition comprises:

A) at least one colour- and/or special effect-imparting pigment,
B) water and optionally organic solvents and conventional coating additives and
C) at least one water-dilutable polyurethane/urea resin with a urethane group content of 80 - 220 mmol/g of solid resin of the polyurethane/urea resin, a urea group content of 20-150 mmol/g of solid resin of the polyurethane/urea resin and a crosslinked fraction of 20-95%, relative to solid resin of the polyurethane/urea resin, wherein the polyurethane/urea resin is obtained by

I. preparing an NCO-functional polyurethane prepolymer by reacting

a) at least one polyol with a number average molecular weight Mn of 500 to 5000,
b) at least one polyisocyanate and
c) at least one compound with more than one group reactive towards isocyanate groups and at least one group selected from the group consisting of ionic group, group capable of forming ions and non-ionic hydrophilic group,

II. reacting the NCO-functional polyurethane prepolymer obtained in step I with a polyamine component d), said polyamine component

d) comprising

d1) 0 - 80% by weight of at least one diamine,
d2) 20 - 100% by weight of at least one polyamine with a functionality > 2, wherein the % by weight of components d1) and d2) add up to 100% by weight.

**2.** A process according to claim 1, wherein the water-dilutable polyurethane resin C) has a urethane group content of 100 - 200 mmol/g of solid resin of the polyurethane/urea resin, a urea group content of 40 - 100 mmol/g of solid resin of the polyurethane/urea resin and a crosslinked fraction of 30-90%, relative to solid resin of the polyurethane/urea resin.

**3.** A process according to claims 1 or 2, wherein the polyamine component d) comprises

d1) 20 - 50% by weight of at least one diamine,
d2) 50 - 80% by weight of at least one polyamine with a functionality > 2, wherein the % by weight of components d1) and d2) add up to 100% by weight.

**4.** A process according to any of the preceding claims, wherein the polyamine component d) comprises

d1) 20 - 50% by weight of at least one diamine,
d2) 50 - 80% by weight of at least one polyamine with functionality 3 and/or at least one polyamine with functionality 4, wherein the % by weight of components d1) and d2) add up to 100% by weight.

**5.** A process according to any of the preceding claims, wherein the reaction in accordance with step II proceeds after conversion of the NCO-functional polyurethane prepolymer into the aqueous phase.

**6.** A process according to any of the preceding claims, wherein the polyols a) comprise polycarbonate diols and/or polyester diols.

**7.** A process according to any of the preceding claims , wherein the water-based colour- and/or special effect-imparting base coat composition comprises at least one metal pigment.

**8.** A process according to any of the preceding claims, wherein the water-based colour- and/or special effect-imparting base coat composition is applied in two layers with an intermediate flashing-off period after applying the first base coat layer.

**9.** A process according to any of the preceding claims, wherein the substrate is a precoated vehicle substrate and the process repairs the precoated vehicle substrate.

European Patent Office

# EUROPEAN SEARCH REPORT

Application Number
EP 06 01 1749

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 721 018 A (GOELDNER ET AL) 24 February 1998 (1998-02-24) * the whole document * | 1-9 | INV. B05D7/00 B05D5/00 |
| Y | US 4 745 151 A (NOLL ET AL) 17 May 1988 (1988-05-17) * the whole document * | 1-9 | |
| Y | EP 1 152 041 A (E.I. DU PONT DE NEMOURS AND COMPANY) 7 November 2001 (2001-11-07) * the whole document * | 1-9 | |
| A | EP 1 371 683 A (E.I.DU PONT DE NEMOURS AND COMPANY) 17 December 2003 (2003-12-17) * the whole document * | 1-9 | |
| A | EP 1 213 334 A (E.I. DU PONT DE NEMOURS AND COMPANY) 12 June 2002 (2002-06-12) * the whole document * | 1-9 | |
| A,D | WO 98/05696 A (WOLFF WALSRODE AG; HECHT, REINHOLD; HOPPE, LUTZ; LUEHMANN, ERHARD; DAN) 12 February 1998 (1998-02-12) * the whole document * | 1-9 | TECHNICAL FIELDS SEARCHED (IPC): B05D |

The present search report has been drawn up for all claims

| Place of search | Date of completion of the search | Examiner |
|---|---|---|
| Munich | 29 September 2006 | Connor, Marco |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

2

EPO FORM 1503 03.82 (P04C01)

## ANNEX TO THE EUROPEAN SEARCH REPORT ON EUROPEAN PATENT APPLICATION NO. EP 06 01 1749

This annex lists the patent family members relating to the patent documents cited in the above-mentioned European search report.
The members are as contained in the European Patent Office EDP file on
The European Patent Office is in no way liable for these particulars which are merely given for the purpose of information.

29-09-2006

| Patent document cited in search report | Publication date | Patent family member(s) | Publication date |
|---|---|---|---|
| US 5721018 A | 24-02-1998 | NONE | |
| US 4745151 A | 17-05-1988 | CA 1303769 C | 16-06-1992 |
| | | DE 3613492 A1 | 29-10-1987 |
| | | EP 0242731 A2 | 28-10-1987 |
| | | ES 2027986 T3 | 01-07-1992 |
| | | JP 2630394 B2 | 16-07-1997 |
| | | JP 62256817 A | 09-11-1987 |
| EP 1152041 A | 07-11-2001 | AT 275173 T | 15-09-2004 |
| | | CA 2336512 A1 | 28-10-2001 |
| | | DE 60105223 D1 | 07-10-2004 |
| | | DK 1152041 T3 | 28-02-2005 |
| | | ES 2226988 T3 | 01-04-2005 |
| | | JP 2001316612 A | 16-11-2001 |
| | | MX PA01002093 A | 23-10-2002 |
| | | PT 1152041 T | 31-12-2004 |
| | | US 6451896 B1 | 17-09-2002 |
| EP 1371683 A | 17-12-2003 | US 2004162378 A1 | 19-08-2004 |
| | | US 2006142459 A1 | 29-06-2006 |
| EP 1213334 A | 12-06-2002 | AT 264897 T | 15-05-2004 |
| | | CA 2363267 A1 | 06-06-2002 |
| | | DE 60102888 D1 | 27-05-2004 |
| | | DE 60102888 T2 | 28-04-2005 |
| | | ES 2218326 T3 | 16-11-2004 |
| | | JP 2002201409 A | 19-07-2002 |
| | | US 2002102407 A1 | 01-08-2002 |
| WO 9805696 A | 12-02-1998 | AU 3940497 A | 25-02-1998 |
| | | DE 19630905 A1 | 05-02-1998 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 1159323 A
- WO 0102457 A
- WO 9805696 A